# EUROPEAN PATENT APPLICATION

(11) **EP 4 722 647 A2**
(43) Date of publication of application: **08.04.2026**
(21) Application number: 25200726.5
(22) Date of filing: 08.09.2025
(51) Int. Cl.: G01C 19/38, G01C 25/00

(54) **ARTIFICIAL INTELLIGENCE AIDING FOR GYROCOMPASSING**

(30) Priority: 01.10.2024 US 202418903961
(71) Applicant: Honeywell International Inc., Charlotte, NC 28202 (US)
(72) Inventor: BILEK, Jan, Charlotte, 28202 (US); ZARUBA, Michal, Charlotte, 28202 (US); LASPINA, Alessandro Maria, Charlotte, 28202 (US); CAGAS, Martin, Charlotte, 28202 (US); HYTYCHOVA, Tereza, Charlotte, 28202 (US)
(74) Representative: Haseltine Lake Kempner LLP

(57) **Abstract**

A system comprises a gyrocompass unit onboard a vehicle, with the gyrocompass unit comprising an inertial measurement unit (IMU) operative to produce inertial data for the vehicle. At least one processor is in operative communication with the IMU, the at least one processor hosting a set of program modules comprising: a gyrocompassing computation module operative to process the inertial data from the IMU and determine an attitude, heading, or latitude of the vehicle; and an artificial intelligence module including a trained gyrocompassing machine learning model, which is operative to process the inertial data from the IMU and predict an attitude, heading, or latitude of the vehicle. The gyrocompassing computation module is configured to receive the predicted attitude, heading, or latitude from the machine learning model, which operates as an aiding source during initialization or start-up of the gyrocompass unit to reduce an initial alignment time of the gyrocompass unit.

## Description

### BACKGROUND

Gyrocompassing is a north-finding approach that utilizes a gyroscope's capability to detect Earth rotation in order to determine the north direction. Gyrocompassing can be performed with any kind of gyroscope having sufficient performance, such as mechanical gyroscopes, ring laser gyroscopes (RLGs), fiber optics gyroscopes, or micro-electromechanical systems (MEMS) gyroscopes.

A gyrocompassing process includes an initial alignment phase (or settling, in case of mechanical gyroscopes), and long-term gyrocompassing (including continuous alignment) that follows throughout vehicle operations. Depending on the gyroscope device, the initial alignment phase takes from several minutes to several hours, and a heading output is not provided prior to its conclusion. Additionally, the most common gyrocompassing application is for marine vehicles, where the gyroscope device initialization is performed on the water. This means the gyroscope device cannot rely on static conditions to align (or settle), and also needs to support powerup in a dynamic environment.

Because mechanical gyroscopes require repeated regular maintenance, the demand grows for zero maintenance solutions that base their gyrocompassing capability not on settling the spinning mass towards north, but on measuring the earth rate with high-accuracy sensors. While extremely accurate solutions such as provided by RLGs are limited by their high price, a MEMS-based solution combines affordable price with sufficient accuracy. However, there are multiple factors impacting the commercial success of a gyrocompass, such as accuracy and technical properties meeting the Wheelmark certification criteria; time from powerup to heading provision; maintenance intervals; and cost of the gyrocompass.

An optimal solution is a compromise between the aforementioned factors by using the MEMS gyroscope sensors that require no maintenance, have low manufacturing cost, and are accurate enough to meet the certification criteria. The time from powerup to heading provision directly depends on the MEMS sensors accuracy and expected accuracy of the output. Since IMU performance and long initialization times significantly impact the competitiveness of a gyrocompass product, it is desired to find aiding sources that enable faster initial alignment. Such aiding sources can be a global navigation satellite system (GNSS) signal, vessel velocity, or magnetic heading.

However, none of these aiding sources can be used for certification testing and may not be available during the initialization. The latter applies especially to GNSS sensors, which do not provide track aiding such as when a ship is docked in a harbor.

Thus, there is a need for other aiding approaches that overcome the foregoing deficiencies while providing for faster initial alignment during a gyrocompassing process.

### SUMMARY

A system comprises a gyrocompass unit onboard a vehicle, with the gyrocompass unit comprising an inertial measurement unit (IMU) operative to produce inertial data for the vehicle. At least one processor is in operative communication with the IMU, the at least one processor hosting a set of program modules comprising: a gyrocompassing computation module operative to process the inertial data from the IMU and determine an attitude, heading, or latitude of the vehicle; and an artificial intelligence module including a trained gyrocompassing machine learning model, which is operative to process the inertial data from the IMU and predict an attitude, heading, or latitude of the vehicle. The gyrocompassing computation module is configured to receive the predicted attitude, heading, or latitude from the machine learning model, which operates as an aiding source during initialization or start-up of the gyrocompass unit to reduce an initial alignment time of the gyrocompass unit.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for gyrocompassing utilizing artificial intelligence (AI) aiding for a vehicle, according to one embodiment;
Figure 2 is a flow diagram of a method for training and operating a gyrocompassing system utilizing AI aiding, according to one implementation;
Figure 3 is a flow diagram of a method for verification of predicted attitudes from an AI model, according to an example implementation; and
Figure 4 is a block diagram of a system for gyrocompassing utilizing AI aiding for a vessel, according to another embodiment.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A system and method for providing artificial intelligence (AI) aiding for gyrocompassing techniques, are described herein.

The present approach provides AI-based aiding for gyrocompassing techniques that does not rely on any external information source. A machine learning based system processes internal data provided by gyroscopes and accelerometers within a gyrocompass. A model trained on a large dataset (e.g., real-world recordings and synthetically generated data) can predict a vehicle's attitude (including heading) significantly faster than conventional computations, which do not allow a dynamic fit to a current vehicle (e.g., ship/sea) state and require long-term averaging to filter out environmental (e.g., waves) impact.

While a heading can be computed swiftly, the heading cannot be directly used as the gyrocompass output, because the accuracy and overall reliability of the information cannot be guaranteed and may be the subject of unpredicted degradation or error. This limits the use of neural network computation outcomes as the system output, but not as the aiding source that provides assumptions to conventional computations that are resilient to such issues.

If the AI-predicted outputs are accurate or suffer only from a limited accuracy degradation, the predicted vehicle state is used to filter out its movements from the measured Earth rotation. The accuracy of predictions is then verified by the detection of the expected Earth rotation component by conventional algorithms for a brief period of time.

If the AI-predicted outputs are inaccurate or erroneous, the verification by conventional algorithms fail, as the Earth rotation component does not match the predicted attitude, and the aiding source is not used. This means the initialization would not benefit from the aiding source and takes longer due to the necessity of long-term averaging, but the gyrocompass unit would be fully operational after the initialization with no accuracy impact.

Furthermore, by using the AI predictions as the aiding instead of the direct use as the system output, the problem of using the AI in certified systems and/or environment is mitigated. The result is verified by a conventional computation algorithm that can be developed according to any design assurance level or its equivalent. In one implementation, a conventional gyrocompassing computation algorithm can be modified to provide verification of the AI predictions and/or use AI model inputs as the aiding source.

The present approach is applicable to any vehicle that uses a gyrocompass, such marine vessels or aerial vehicles. For example, marine vessels can include ships, yachts, sailboats, submarines, or the like. Aerial vehicles can include passenger airliners, air taxis, uncrewed aircraft systems (UAS), commercial delivery aircraft, business jets, helicopters, missiles, or the like.

In one implementation, the AI aiding approach for gyrocompassing is based on computing the attitude, including heading, and latitude, by a trained machine learning model, and verifying the computed values by a conventional gyrocompassing algorithm prior to providing the gyrocompassing output. This approach provides significant advantages in that the AI model, trained on extensive datasets, is able to adapt the computations to specific environment and vehicle conditions and properties, reaching the results significantly faster than conventional methods, which need a more robust approach based on long-term averaging. In addition, massive parallelization native to artificial neural networks used by the AI model provides for faster processing of the datasets.

Moreover, verification of AI-predicted values can be done by conventional computation algorithms. This provides for resolution of potential rare AI errors by verification via conventional certifiable approaches. In particular, a two-grade fallback mechanism is provided. 1) In case of AI prediction inaccuracy, inaccurate heading and latitude predictions are used only for constraining a projection plane in conventional indirect gyrocompassing computations. While this is less beneficial, it still provides faster initialization than with no aiding. 2) In case of AI prediction error, conventional gyrocompassing computations are used with no aiding. While this results in a longer time required for initialization, the system is fully operational afterwards.

The present approach is capable of providing dynamic alignment (e.g., when a vessel is subject to accelerations, as well as rotations, on a rough sea), as well as static alignment (e.g., when a vehicle is stationary with respect to the Earth).

Further, in an optional mode of operation, the primary source of navigation information can be from the AI model. A conventional gyrocompassing computation module can serve as an integrity monitor for the navigation information from the AI model.

The present AI aiding approach for gyrocompassing provides several benefits, including reducing the initial alignment time of the gyrocompass; and allowing for the use of lower-grade gyroscopes and accelerometers, thereby lowering the manufacturing price.

Further details of various embodiments are described hereafter and with reference to the drawings.

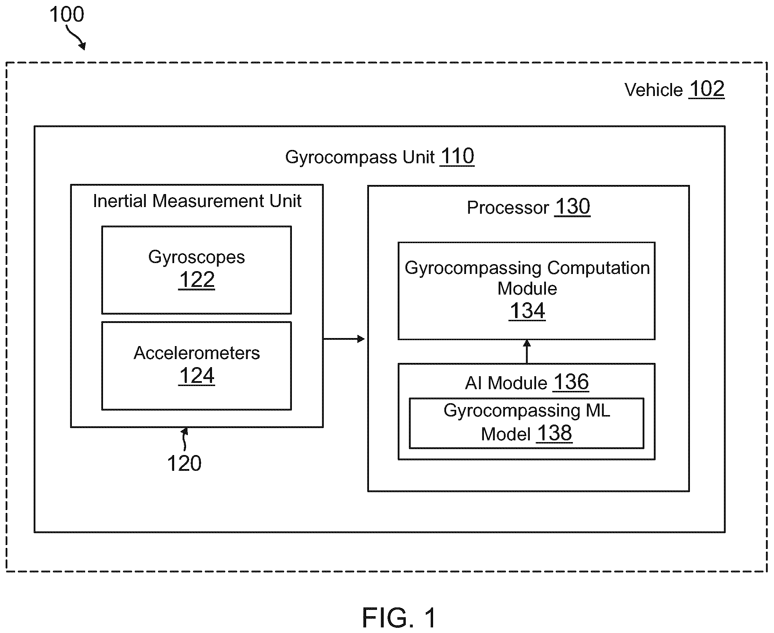

Figure 1 is a block diagram of a system 100 for gyrocompassing utilizing AI aiding for a vehicle 102, according to one embodiment. The system 100 comprises a gyrocompass unit 110 onboard vehicle 102, with gyrocompass unit 110 including an inertial measurement unit (IMU) 120 operative to produce inertial data for vehicle 102. The IMU 120 includes one or more triads of gyroscopes 122 and one or more triads of accelerometers 124, such as micro-electromechanical systems (MEMS) gyroscopes and MEMS accelerometers.

At least one processor 130 is in operative communication with IMU 120, and hosts a set of program modules comprising a gyrocompassing computation module 134, and an AI module 136 including a trained gyrocompassing machine learning (ML) model 138. As described further hereafter, gyrocompassing machine learning model 138 can be trained using various larger and smaller datasets. For example, gyrocompassing machine learning model 138 can be fine-tuned with respect to specific datasets for vehicle 102.

The gyrocompassing computation module 134 is operative to process the inertial data from IMU 120, and determine an estimated attitude, heading, or latitude of vehicle 102. The gyrocompassing machine learning model 138 is operative to process the inertial data from IMU 120 and determine a predicted attitude, heading, or latitude of vehicle 102. The gyrocompassing computation module 134 is configured to receive the predicted attitude, heading, or latitude from the gyrocompassing machine learning model 138, which operates as an aiding source during initialization or start-up of gyrocompass unit 110 to reduce an initial alignment time of gyrocompass unit 110. In addition, gyrocompassing computation module 134 can be configured to receive predicted attitude data from gyrocompassing machine learning model 138 as a continuous aiding source.

Optionally, AI module 136 can serve as the primary source of navigation information, while the predicted attitude, heading, or latitude from gyrocompassing machine learning model 138 is verified by a gyrocompassing algorithm in gyrocompassing computation module 134, prior to providing an output from gyrocompass unit 110.

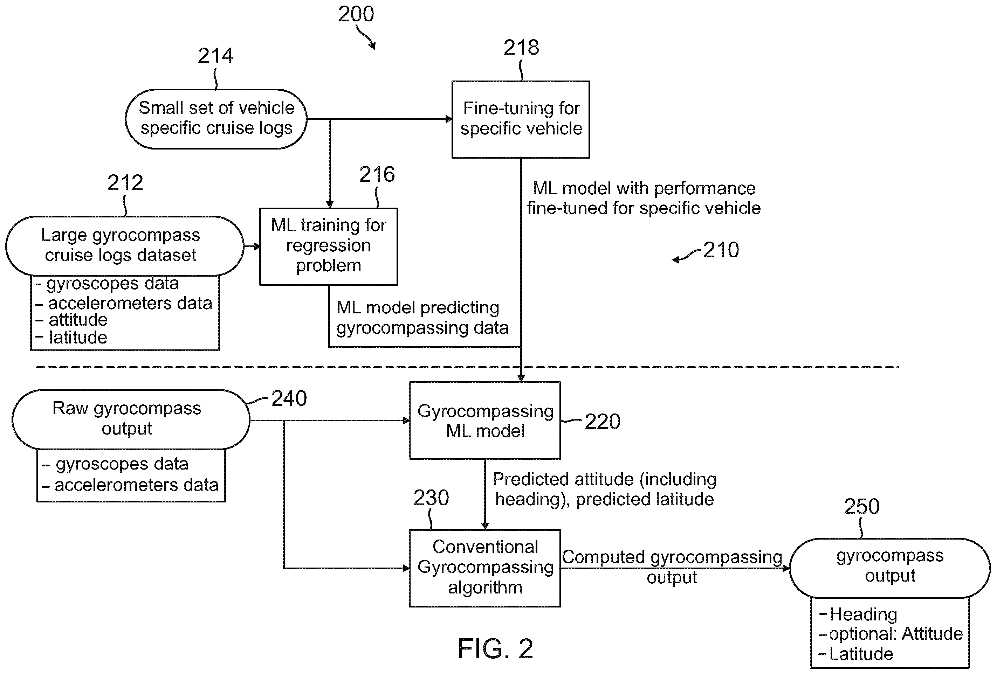

Figure 2 is a flow diagram of a method 200 for training and operating a gyrocompassing system utilizing AI aiding, according to an example implementation. The method 200 includes an offline procedure 210 with various training steps for creating a gyrocompassing machine learning (ML) model 220, prior to use with a conventional gyrocompassing algorithm 230.

The offline procedure 210 includes obtaining training data, such as a larger gyrocompass cruise logs dataset (block 212), including gyroscopes data, accelerometers data, attitude (including heading), and latitude; and a smaller set of vehicle specific cruise logs (block 214). A module for ML training for a regression problem (block 216) is configured to receive the large gyrocompass cruise logs dataset (from block 212) and the small set of vehicle specific cruise logs (from block 214). A module for fine-tuning for a specific vehicle (block 218) is configured to receive the small set of vehicle specific cruise logs (from block 214).

The module for ML training for a regression problem (block 216) is operative to output a trained ML model predicting gyrocompassing data, which can be used in creating the gyrocompassing ML model 220. In one example of this step, a baseline ML model can be provided with default weights of artificial neuron connections (e.g., can be zero, random, simple heuristics, etc.). Then, procedure 210 iteratively adjusts the weights by exposing the baseline ML model to the training data (e.g., larger gyrocompass cruise logs dataset) until the results are good, and can export this trained ML model with new weights to gyrocompassing ML model 220.

The module for fine-tuning for a specific vehicle (block 218) is operative to output a ML model with performance fine-tuned for the vehicle, which can also be used in creating the gyrocompassing ML model 220. In one example of this step, a baseline ML model can be provided with default weights of artificial neuron connections. Then, procedure 210 iteratively adjust the weights by exposing the baseline ML model to the training data (e.g., small set of vehicle specific cruise logs) until the results are good, and can export this trained ML model with new weights to gyrocompassing ML model 220.

In some implementation, the above trained ML models can be provided in two separate files or in a single file to the gyrocompassing ML model 220. For example, in the case of directly replacing the trained weights, and storing not only the adjusted weights, but a complete copy of the fine-tuned model, a single file can be provided.

During operation, a raw gyrocompass output (block 240) is obtained that includes gyroscopes data and accelerometers data, which is sent to the gyrocompassing ML model 220, and to the gyrocompassing algorithm 230. The gyrocompassing ML model 220 is configured to generate and output a predicted attitude (including heading) and a predicted latitude, which are sent to the gyrocompassing algorithm 230 for processing along with the raw gyrocompass output (from block 240). The gyrocompassing algorithm 230 is operative to generate a computed gyrocompassing output, based on the various received data inputs. The computed gyrocompassing output is sent to a gyrocompass output module 250, which provides a heading, and optionally, a complete attitude (roll, pitch, heading), and/or geographical latitude, to downstream vehicle systems for controlling and guiding the vehicle.

Further details related to training and operating a gyrocompassing system utilizing AI aiding, are described as follows.

### Machine Learning Model Training

There are multiple approaches that can be used for AI model selection and training. The gyrocompassing based on processing of raw data from gyroscopes and accelerometers in the gyrocompass unit is a regression problem type. This can be addressed with various neural networks, such as classic recurrent neural networks, long short-term memory (LSTM) neural networks, neural networks with transformer architecture, or the like. The training of the AI model follows machine learning best practices and has the following steps: dataset preparation, iterative training, final evaluation, and deployment.

In the step of dataset preparation, a large accurate dataset is required for the training, and the first step is data collection in real environments. Example data sources include data logs from high-accuracy gyroscopes and accelerometers mounted on one or more different vehicles; vehicle attitudes obtained either from dedicated sensors or computed from gyroscope and accelerometer datasets; and other data sources. The second step for dataset preparation is enriching the collected dataset with synthetic data. The optimal approach for this step is to engage the navigation models capable of simulating vehicle trajectories and enrich these trajectories, such as by dynamic changing swaying motions fitting the dynamics observed in a recorded dataset (e.g., from a marine vessel). The AI-based generation of synthetic data is not recommended for this use-case, as the influence of the Earth rotation needs to be present in the generated data, and it is probable the AI-generated data cannot simulate this influence with sufficient accuracy.

In the step of iterative training, the training process includes initial setup of hyperparameters and other training options, and iterative adjustment of these settings based on intermediate evaluations of the trained model's performance. Additionally, new data can be introduced to the training dataset to handle performance issues in certain conditions (e.g., gyrocompassing at high speeds). This new data can be easily prepared if the configurable generator of synthetic data is implemented.

In the final evaluation step, the evaluation of the AI model should be performed on the set of real recorded data selected through the various latitudes, speeds, and environment conditions that was never used in the training process nor intermediate evaluation. If possible, live data from the real environment should be used as well.

In the deployment step, the evaluated AI model that meets a required performance is deployed to the gyrocompass hardware that processes raw data within the gyrocompass unit and computes the heading output. There, the AI model runs in parallel with the conventional gyrocompassing computation, providing the gyrocompassing computation with early attitude aiding.

### Verification of Predicted Attitude

The AI-predicted values of attitude (including heading) together with their rates (time derivatives), can be checked, at first, against kinematical constraints, such as Euler rates vs. body rates, and their fitness evaluated. After a certain level of kinematical compatibility is ensured, ensuing statistical tests, depending on a particular (conventional) gyrocompassing algorithm, can then be employed.

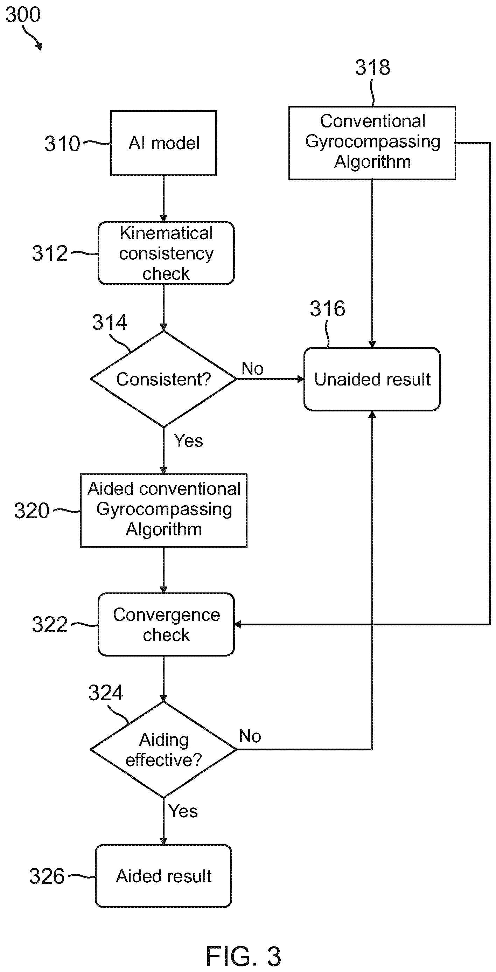

Figure 3 is a flow diagram of a method 300 for verification of predicted attitudes, according to an example implementation. In method 300, an AI model 310 sends a predicted attitude value to a kinematical consistency check function (block 312), and a determination is made whether the predicted attitude value is consistent against kinematical constraints (block 314). For example, using predictions from the AI model and live angular rates from the IMU, the kinematical consistency check is performed by converting body rates to Euler rates, and comparing the Euler rates with predicted values and their time derivatives from the AI model. If the predicted attitude value is not consistent, an unaided result is used (block 316) based on an output from an unaided conventional gyrocompassing algorithm (block 318). If the determination is made that the predicted attitude is consistent, then an aided conventional gyrocompassing algorithm is employed (block 320).

A convergence check is then performed (e.g., using statistical tests) (block 322), based on an output from the aided conventional gyrocompassing algorithm (from block 320) and an output from the conventional gyrocompassing algorithm (from block 318). Based on the results of the convergence check, a determination is made whether the aiding is effective (block 324). If the aiding is determined to not be effective, the unaided result is used (from block 316). If the aiding is determined to be effective, then an aided result is utilized (block 326). For example, the aided and unaided results (projection plane, latitude, and heading) need to converge (or at least should not be significantly different) using a statistical test, for the aiding to be effective. In one example, method 300 can compare the attitude, heading, or latitude computed by one source against another source (e.g., subtract one output minus another output to compute a residual) using a user selected threshold. If the residual is less than or equal to the threshold, then there is convergence; if the residual is greater than the threshold, then there is no convergence. This can be performed at a single epoch or using multiple epochs.

### Initialized Indirect Gyrocompassing

In an alternative approach, it is possible to limit the aiding usage only to the heading and latitude predictions and use these as the estimation of a projection plane utilized in an indirect gyrocompassing (IGC) method. In the IGC method, an inertial frame of reference (inertial in the sense of rotational motion, not translational motion) is established and in this frame, a gravity vector exhibits precession, tracing out a circular arc. A plane determined by this arc, also called the projection plane, has a normal vector which is parallel to the Earth rotation axis. A tangent vector to the arc represents a local eastern direction. A vector product of the plane normal with a tangent vector gives a local northern direction. Moreover, the gravity vector and the Earth rotation axis subtend an angle equal to a local colatitude.

The analysis of the precession arc described above is usually very time consuming (mainly due to the Earth rotation rate being slow - roughly 15°/ hr). In order to speed up the convergence of an IGC algorithm, an initialization of the estimated parameters by the AI-predicted values of the heading and latitude can be done.

This approach is also applicable in case of inaccuracy in AI predictions. While an inaccuracy may prevent the direct use of the ML model output due to the impossibility to verify the AI prediction with conventional computation, the use of heading and latitude predictions as aiding information is significantly more tolerant to errors and still offers value in accelerating the initial alignment.

### Target System Architecture

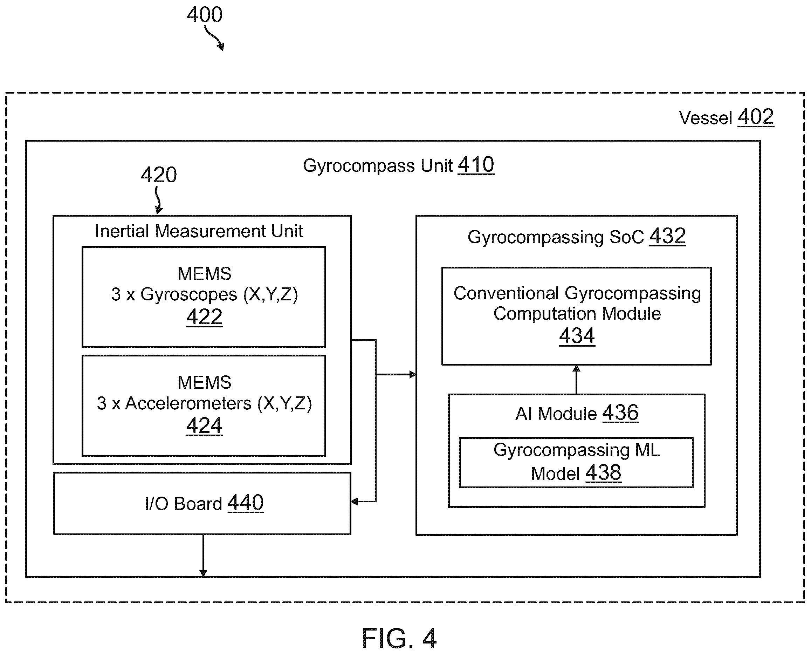

Figure 4 is a block diagram of a system 400 for gyrocompassing utilizing AI aiding for a vessel 402, according to another embodiment. The system 400 comprises a gyrocompass unit 410 that includes an inertial measurement unit (IMU) 420 operative to produce inertial data for vessel 402 such as a ship. The IMU 420 includes a set of gyroscopes 422 and a set of accelerometers 424, such as MEMS gyroscopes and MEMS accelerometers, which provide for six degrees of freedom (DOF). For example, gyroscopes 422 can be three-axis gyroscopes (X, Y, Z), which measure rotational movement about three perpendicular axes (e.g., roll, pitch, yaw). The accelerometers 424 can be three-axis accelerometers (X, Y, Z), which measure translational movement about three perpendicular axes (e.g., surge, sway, heave).

A processor is in operative communication with IMU 420, and can be implemented as a gyrocompassing system on a chip (SOC) 432, or other variation of hardware, which processes raw data from IMU 420 to compute a heading output. The SOC 432 hosts a set of program modules comprising a conventional gyrocompassing computation module 434, and an AI module 436 including a trained gyrocompassing machine learning (ML) model 438. The gyrocompassing computation module 434 is operative to process the inertial data from IMU 420, and determine an estimated attitude, heading, or latitude of vessel 402. The gyrocompassing machine learning model 438 is operative to process the inertial data from IMU 420 and determine a predicted attitude, heading, or latitude of the vessel 402.

An input-output (I/O) board 440 is in operative communication with IMU 420 and gyrocompassing SOC 432. The I/O board 440 is configured to send data from IMU 420 and gyrocompassing SOC 432 to onboard downstream systems for further processing.

The gyrocompassing computation module 434 is configured to receive the predicted attitude, heading, or latitude from the gyrocompassing machine learning model 438, which operates as an aiding source during initialization or start-up of gyrocompass unit 410 to reduce an initial alignment time of gyrocompass unit 410. In addition, gyrocompassing computation module 434 can be configured to receive predicted data from gyrocompassing machine learning model 438 as a continuous aiding source.

Optionally, AI module 436 can serve as the primary source of navigation information, while the predicted attitude, heading, or latitude from gyrocompassing machine learning model 438 is verified by a gyrocompassing algorithm in gyrocompassing computation module 434, prior to providing an output from gyrocompass unit 410.

The processing units and/or other computational devices used in the method and system described herein may be implemented using software, firmware, hardware, or appropriate combinations thereof. The processing unit and/or other computational devices may be supplemented by, or incorporated in, specially-designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: a gyrocompass unit onboard a vehicle, the gyrocompass unit comprising: an inertial measurement unit (IMU) operative to produce inertial data for the vehicle; and at least one processor in operative communication with the IMU, the at least one processor hosting a set of program modules comprising: a gyrocompassing computation module operative to process the inertial data from the IMU and determine an attitude, heading, or latitude of the vehicle; and an artificial intelligence (AI) module including a trained gyrocompassing machine learning model, which is operative to process the inertial data from the IMU and predict an attitude, heading, or latitude of the vehicle; wherein the gyrocompassing computation module is configured to receive the predicted attitude, heading, or latitude from the machine learning model, which operates as an aiding source during initialization or start-up of the gyrocompass unit to reduce an initial alignment time of the gyrocompass unit.

Example 2 includes the system of Example 1, wherein the predicted attitude, heading, or latitude from the machine learning model is verified in the gyrocompassing computation module, prior to providing an output from the gyrocompass unit.

Example 3 includes the system of any of Examples 1-2, wherein the gyrocompassing computation module is configured to receive predicted attitude data from the gyrocompassing machine learning model as a continuous aiding source.

Example 4 includes the system of any of Examples 1-3, wherein the IMU includes one or more gyroscopes and one or more accelerometers.

Example 5 includes the system of any of Examples 1-4, wherein the IMU includes a set of three-axis micro-electromechanical systems (MEMS) gyroscopes, and a set of three-axis MEMS accelerometers.

Example 6 includes the system of any of Examples 1-5, wherein the at least one processor is implemented in a gyrocompassing system on a chip (SOC), which processes inertial data from the IMU to compute a heading output.

Example 7 includes the system of Example 6, further comprising an input-output (I/O) board in operative communication with the IMU and the gyrocompassing SOC.

Example 8 includes the system of any of Examples 1-7, wherein the vehicle is a marine vessel.

Example 9 includes the system of any of Examples 1-7, wherein the vehicle is an aerial vehicle.

Example 10 includes the system of any of Examples 1-9, wherein the gyrocompassing machine learning model is fine-tuned with respect to specific datasets for a type of the vehicle.

Example 11 includes a method for a gyrocompassing system utilizing artificial intelligence (AI) aiding, the method comprising: training a gyrocompassing machine learning model by a process comprising: obtaining a larger gyrocompass cruise logs dataset, including gyroscopes data, accelerometers data, attitude, and latitude; obtaining a smaller set of vehicle specific cruise logs; sending the larger gyrocompass cruise logs dataset and the smaller set of vehicle specific cruise logs to a machine learning training module for a regression problem, which trains and outputs a machine learning model predicting gyrocompassing data; sending the smaller set of vehicle specific cruise logs to a fine-tuning module for a vehicle, which trains and outputs a machine learning model weights with performance fine-tuned for the vehicle; wherein the machine learning model predicting gyrocompassing data and/or the machine learning model weights with performance fine-tuned for the vehicle are sent to the gyrocompassing machine learning model for use in gyrocompassing operations; and implementing the trained gyrocompassing machine learning model in a gyrocompass unit for the vehicle, the gyrocompass unit comprising an inertial measurement unit (IMU) operative to produce inertial data for the vehicle, and a gyrocompassing computation module operative to process the inertial data from the IMU.

Example 12 includes the method of Example 11, further comprising: sending inertial data from the IMU to the gyrocompassing machine learning model and to the gyrocompassing computation module; wherein the gyrocompassing machine learning model generates and outputs predicted data including attitude, heading, or latitude, which are sent to the gyrocompassing computation module for processing; wherein the gyrocompassing computation module generates a computed gyrocompassing output, which is sent to a gyrocompass output module to provide a heading, a complete attitude, and/or a geographical latitude to downstream vehicle systems for controlling and guiding the vehicle.

Example 13 includes the method of any of Examples 11-12, wherein the gyrocompassing machine learning model operates as an aiding source during initialization or start-up of the gyrocompass unit to reduce an initial alignment time of the gyrocompass unit.

Example 14 includes the method of any of Examples 11-13, wherein the predicted data from the gyrocompassing machine learning model is verified in the gyrocompassing computation module by a process comprising: sending the predicted data to a kinematical consistency check function; determining whether the predicted data is consistent against kinematical constraints using the kinematical consistency check function; in response to determining that the predicted data is not consistent, using an unaided result from an unaided gyrocompassing algorithm as the computed gyrocompassing output; in response to determining that the predicted data is consistent, activating an aided gyrocompassing algorithm in the gyrocompassing computation module; performing a convergence check based on an output from the aided gyrocompassing algorithm and an output from the unaided gyrocompassing algorithm; and determining whether aiding is effective based on the results of the convergence check; in response to determining that the aiding is not effective, using the unaided result from the unaided gyrocompassing algorithm as the computed gyrocompassing output; in response to determining that the aiding is effective, using an aided result from the aided gyrocompassing algorithm as the computed gyrocompassing output.

Example 15 includes the method of Example 14, wherein the aided result is limited to use of heading and latitude predictions, which are employed as an estimation of a projection plane for an indirect gyrocompassing (IGC) method.

Example 16 includes the method of any of Examples 11-15, wherein the gyrocompassing computation module receives predicted attitude data from the gyrocompassing machine learning model as a continuous aiding source.

Example 17 includes the method of any of Examples 11-16, wherein the vehicle is a marine vessel.

Example 18 includes the method of any of Examples 11-16, wherein the vehicle is an aerial vehicle.

Example 19 includes the method of any of Examples 11-18, wherein the IMU includes one or more gyroscopes and one or more accelerometers.

Example 20 includes the method of any of Examples 11-18, wherein the IMU includes a set of three-axis micro-electromechanical systems (MEMS) gyroscopes, and a set of three-axis MEMS accelerometers.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
a gyrocompass unit onboard a vehicle, the gyrocompass unit comprising:
an inertial measurement unit (IMU) operative to produce inertial data for the vehicle; and
at least one processor in operative communication with the IMU, the at least one processor hosting a set of program modules comprising:
a gyrocompassing computation module operative to process the inertial data from the IMU and determine an attitude, heading, or latitude of the vehicle; and
an artificial intelligence (AI) module including a trained gyrocompassing machine learning model, which is operative to process the inertial data from the IMU and predict an attitude, heading, or latitude of the vehicle;
wherein the gyrocompassing computation module is configured to receive the predicted attitude, heading, or latitude from the machine learning model, which operates as an aiding source during initialization or start-up of the gyrocompass unit to reduce an initial alignment time of the gyrocompass unit.

2. The system of claim 1, wherein the predicted attitude, heading, or latitude from the machine learning model is verified in the gyrocompassing computation module, prior to providing an output from the gyrocompass unit.

3. The system of claim 1, wherein the gyrocompassing computation module is configured to receive predicted attitude data from the gyrocompassing machine learning model as a continuous aiding source.

4. The system of claim 1, wherein:
the IMU includes a set of three-axis micro-electromechanical systems (MEMS) gyroscopes, and a set of three-axis MEMS accelerometers; and
the at least one processor is implemented in a gyrocompassing system on a chip (SOC), which processes inertial data from the IMU to compute a heading output.

5. The system of claim 1, wherein the vehicle is a marine vessel or an aerial vehicle.

6. The system of claim 1, wherein the gyrocompassing machine learning model is fine-tuned with respect to specific datasets for a type of the vehicle.

7. A method for a gyrocompassing system utilizing artificial intelligence (AI) aiding, the method comprising:
training a gyrocompassing machine learning model by a process comprising:
obtaining a larger gyrocompass cruise logs dataset, including gyroscopes data, accelerometers data, attitude, and latitude;
obtaining a smaller set of vehicle specific cruise logs;
sending the larger gyrocompass cruise logs dataset and the smaller set of vehicle specific cruise logs to a machine learning training module for a regression problem, which trains and outputs a machine learning model predicting gyrocompassing data; and
sending the smaller set of vehicle specific cruise logs to a fine-tuning module for a vehicle, which trains and outputs a machine learning model weights with performance fine-tuned for the vehicle;
wherein the machine learning model predicting gyrocompassing data and/or the machine learning model weights with performance fine-tuned for the vehicle are sent to the gyrocompassing machine learning model for use in gyrocompassing operations; and
implementing the trained gyrocompassing machine learning model in a gyrocompass unit for the vehicle, the gyrocompass unit comprising an inertial measurement unit (IMU) operative to produce inertial data for the vehicle, and a gyrocompassing computation module operative to process the inertial data from the IMU.

8. The method of claim 7, further comprising:
sending inertial data from the IMU to the gyrocompassing machine learning model and to the gyrocompassing computation module;
wherein the gyrocompassing machine learning model generates and outputs predicted data including attitude, heading, or latitude, which are sent to the gyrocompassing computation module for processing;
wherein the gyrocompassing computation module generates a computed gyrocompassing output, which is sent to a gyrocompass output module to provide a heading, a complete attitude, and/or a geographical latitude to downstream vehicle systems for controlling and guiding the vehicle.

9. The method of claim 7, wherein the predicted data from the gyrocompassing machine learning model is verified in the gyrocompassing computation module by a process comprising:
sending the predicted data to a kinematical consistency check function;
determining whether the predicted data is consistent against kinematical constraints using the kinematical consistency check function;
in response to determining that the predicted data is not consistent, using an unaided result from an unaided gyrocompassing algorithm as the computed gyrocompassing output;
in response to determining that the predicted data is consistent, activating an aided gyrocompassing algorithm in the gyrocompassing computation module;
performing a convergence check based on an output from the aided gyrocompassing algorithm and an output from the unaided gyrocompassing algorithm; and
determining whether aiding is effective based on the results of the convergence check;
in response to determining that the aiding is not effective, using the unaided result from the unaided gyrocompassing algorithm as the computed gyrocompassing output;
in response to determining that the aiding is effective, using an aided result from the aided gyrocompassing algorithm as the computed gyrocompassing output.

10. The method of claim 9, wherein the aided result is limited to use of heading and latitude predictions, which are employed as an estimation of a projection plane for an indirect gyrocompassing (IGC) method.
